# EUROPEAN PATENT SPECIFICATION

(11) **EP 4 040 065 B1**
(45) Date of publication and mention of the grant of the patent: **01.05.2024**
(21) Application number: 20872564.8
(22) Date of filing: 24.09.2020
(51) Int. Cl.: F24F 11/46, G06F 3/01, H04L 12/28

(54) **CONTROL SYSTEM**
STEUERUNGSSYSTEM
SYSTÈME DE COMMANDE

(30) Priority: 30.09.2019 JP 2019180833
(43) Date of publication of application: 10.08.2022
(73) Proprietor: Daikin Industries, Ltd., Osaka-shi, Osaka 530-0001 (JP)
(72) Inventor: ASHIZAWA, Tomoharu, Osaka-shi, Osaka 530-8323 (JP); NAKATA, Takahiro, Osaka-shi, Osaka 530-8323 (JP); OGAWA, Kouhei, Osaka-shi, Osaka 530-8323 (JP); GUNTURU, Naveen, Osaka-shi, Osaka 530-8323 (JP); HARADA, Kanami, Osaka-shi, Osaka 530-8323 (JP)
(74) Representative: Conti, Marco
(86) International application number: PCT/JP2020/036088
(87) International publication number: WO 2021/065680

(56) References cited:
- WO-A1-2013/118885
- WO-A1-2017/199295
- WO-A1-2018/203368
- JP-A- 2013 076 493
- JP-A- 2015 078 802
- JP-A- 2015 114 014
- JP-A- 2017 150 702
- US-A1- 2016 061 472
- US-A1- 2017 122 613

## Description

### TECHNICAL FIELD

The present invention relates to a control system.

### BACKGROUND ART

Conventionally, a control device controls operation of an air conditioner based on air conditioning operation information associated with a terminal having a highest priority among terminals determined to exist within an effective range (Patent Literature 1 (Japanese Unexamined Patent Publication No. JP 2017-150702 A)). Further examples of known air conditioning control systems are disclosed by patent documents US 20160061472 A1, JP2017150702A and WO2017199295A.

### SUMMARY OF THE INVENTION

### <Technical Problem>

Conventionally, when a wearable terminal worn by a user is used for air-conditioning control, there is a problem that a threshold value related to distance information is unchangeable and there is difficulty in appropriately controlling the air conditioner.

### <Solution to Problem>

Aim of the present invention is to provide a control system which improves the state of the art indicated above. This aim is achieved by the control system according to claim 1. The dependent claims define preferred embodiment of the invention.

A control system according to a first aspect of the invention is defined in claim 1 and provides a control system that controls an air conditioner that air-conditions an air conditioning target area using a detection value of a biometric sensor worn by a user. The control system according to the first aspect includes a first acquisition part, a first determination part, and a second determination part. The first acquisition part acquires first information related to a distance between a reference point of an air conditioning target area and the biometric sensor. The first determination part determines whether to use the detection value of the biometric sensor for controlling the air conditioner based on the first information and a determination criterion. The second determination part determines the determination criterion.

Moreover, the control system further includes a second acquisition part that acquires manually input information. The manually input information includes the information related to a size of the air conditioning target area. The second determination part determines the determination criterion based on the information from the second acquisition part.

In the control system, the air-conditioning control can be more appropriately performed when the detection value of the biometric sensor worn by the user is used for controlling the air conditioner.

A control system according to a second aspect of the invention is the system according to the first aspect, in which the first determination part determines whether the biometric sensor is located in the air conditioning target area based on the first information and the determination criterion.

In the control system, when the biometric sensor is located in the air conditioning target area, the detection value of the biometric sensor can be used for controlling the air conditioner.

A control system according to a third aspect of the invention is the system according to the first or second aspect, in which the first acquisition part acquires radio wave intensity between the air conditioner and the biometric sensor as the first information.

In the control system, the radio wave intensity can be used for determining whether to use the detection value of the biometric sensor for controlling the air conditioner.

A control system according to a fourth aspect of the invention is the system according to the first or second aspect, in which the first acquisition part acquires the position of the reference point of the air conditioning target area and the position of the biometric sensor, respectively and thereby acquires the distance information between the reference point of the air conditioning target area and the biometric sensor as the first information.

In the control system, position information can be used for determining whether to use the detection value of the biometric sensor for controlling the air conditioner.

A control system according to a fifth aspect of the invention is the system according to the first aspect wherein the manually input information further includes the information related to the distance from the reference point of the air conditioning target area.

In the control system, initial setting of control of the air conditioner can be performed by manually inputting information.

An exemplary control system not according to the present invention may include an automatic measurement part that automatically measures the size or a shape of the air conditioning target area, in which the second determination part determines the determination criterion based on a measurement result by the automatic measurement part.

Contrary to the present invention, in this control system, the size or the shape of the air conditioning target area may be automatically measured to determine the determination criterion.

A control system according to a sixth aspect of the invention is the system according to the first aspect, in which upon determination of whether to use detection values of biometric sensors worn by a plurality of users for controlling the air conditioner, the first determination part determines that the detection values of the biometric sensors is not used for controlling the air conditioner when positions of the biometric sensors are changed from an inside of the air conditioning target area to an outside of the air conditioning target area.

In the control system, the air-conditioning control can be more appropriately performed when the detection values of the biometric sensors worn by the plurality of users are used for controlling the air conditioner.

A control system according to a seventh aspect of the invention is the system according to the sixth aspect, in which after the positions of all the biometric sensors connected to the air conditioner are changed from inside of the air conditioning target area to outside of the air conditioning target area, the operation of the air conditioner is stopped or suppressed.

In the control system, energy can be saved by stopping or suppressing the operation of the air conditioner.

A control system according to an eighth aspect of the invention is the system according to the third aspect, in which the air conditioner and the biometric sensor keep connected to each other when the position of the biometric sensor is changed from inside of the air conditioning target area to outside of the air conditioning target area.

In the control system, even when the user wearing the biometric sensor temporarily moves out of the air conditioning target area and then returns into the air conditioning target area, the detection value of the biometric sensor can be promptly used.

A control system according to a ninth aspect of the invention is the system according to the first aspect, in which when the detection value of the biometric sensor is used in the air conditioning target area, the control of the air conditioner is further changed in accordance with the distance.

In the control system, when the positions of some of the plurality of biometric sensors are far from the reference point of the air conditioner, weighting of the detection values of the biometric sensors far from the reference point is reduced, weighting of the detection values of the biometric sensors close to the reference point is increased, and the detection values of the biometric sensors can be used for controlling the air conditioner.

### BRIEF DESCRIPTION OF THE DRAWINGS

FIG. 1 is a conceptual diagram of an air conditioning target area.
FIG. 2 is a functional block diagram of a control system.
FIG. 3 is a flowchart of the control system.
FIG. 4 is an example of the air conditioning target area.
FIG. 5 is an example of control of an air conditioner.
FIG. 6 is a functional block diagram of the control system.
FIG. 7A is a flowchart of the control system.
FIG. 7B is a flowchart of the control system.

### DESCRIPTION OF EMBODIMENTS

### <First embodiment>

### (1) Overall configuration

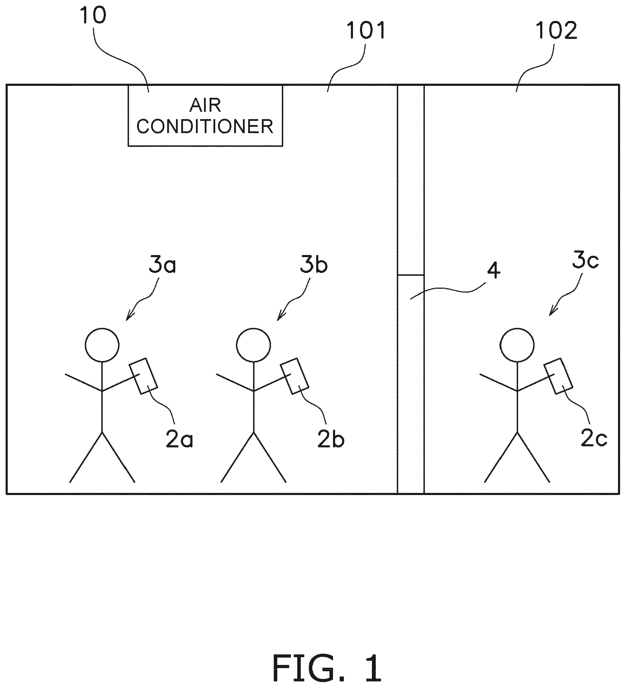

FIG. 1 is a conceptual diagram of an air conditioning target area 101. The air conditioning target area 101 is a space including an air conditioner 10. A user 3a wearing a biometric sensor 2a and a user 3b wearing a biometric sensor 2b are present in the air conditioning target area 101. The air conditioner 10 is controlled using detection values of the biometric sensors 2a and 2b worn by the users 3a and 3b, respectively, being present in the air conditioning target area 101.

A space 102 is separated from the air conditioning target area 101 by a door 4 and is outside the air conditioning target area 101 of the air conditioner 10. A user 3c having a biometric sensor 2c is present in the space 102. A detection value of the biometric sensor 2c worn by the user 3c being present in the space 102 is not used for controlling the air conditioner 10.

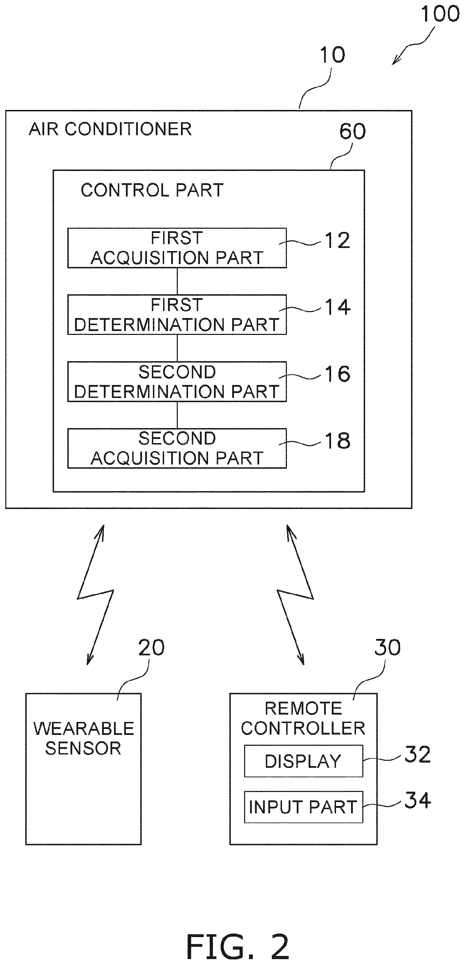

FIG. 2 illustrates a control system 100 according to the present embodiment. The control system 100 includes the air conditioner 10, a wearable sensor (biometric sensor) 20, and a remote controller 30.

The control system 100 according to the present embodiment controls the air conditioner 10 that air-conditions the air conditioning target area 101 using a detection value of the wearable sensor 20 worn by the user. The user uses the remote controller 30 to input information related to a size of the air conditioning target area 101 in which the air conditioner 10 is installed or the like.

### (2) Detailed configuration

### (2-1) Air conditioner 10

The air conditioner 10 is an air conditioner having functions of cooling, heating, dehumidifying, and humidifying. The air conditioner 10 controls the air conditioning target area 101 using the detection value of the wearable sensor 20 worn by the user.

The air conditioner 10 includes a control unit 60.

### (2-1-1) Control unit 60

The control unit 60 is achieved by a computer. The control unit 60 includes a control calculation unit and a storage unit. The control calculation unit may be a processor such as a CPU or a GPU. The control calculation unit reads a program stored in the storage unit and executes predetermined image processing or calculation processing in accordance with the program. The control calculation unit can write a calculation result to the storage unit and read information stored in the storage unit in accordance with the program. FIG. 2 illustrates various function blocks achieved by the control calculation unit. The storage unit can be used as database.

The control unit 60 includes a first acquisition part 12, a first determination part 14, a second determination part 16, and a second acquisition part 18.

The first acquisition part 12 acquires radio wave intensity between the air conditioner 10 and the wearable sensor 20 as first information. The first information is a parameter related to a distance between a reference point of the air conditioning target area 101 and the wearable sensor 20.

The first determination part 14 determines whether the wearable sensor 20 is located in the air conditioning target area 101 based on the first information and a determination criterion. The first determination part 14 determines whether to use the detection value of the wearable sensor 20 for controlling the air conditioner 10 based on the first information as radio wave information between the reference point of the air conditioning target area 101 and the wearable sensor 20 and the determination criterion.

The second determination part 16 determines a determination criterion based on information from the second acquisition part 18. Here, the determination criterion is a threshold value related to the first information.

The second acquisition part 18 acquires information manually input by the user using the remote controller 30. In the control system 100, the manually input information is information related to the size of the air conditioning target area 101 in which the air conditioner 10 is installed.

### (2-2) Biometric sensor 20

In the control system 100 according to the present embodiment, the biometric sensor 20 is a wearable sensor. The air conditioner 10 receives a radio wave from the wearable sensor 20 worn by the user.

### (2-3) Remote controller 30

The remote controller 30 is a remote controller of the air conditioner 10. The remote controller 30 bidirectionally communicates with the air conditioner 10. The remote controller 30 includes a display 32 and an input part 34.

The display 32 displays options for allowing the user to manually input the information related to the size of the air conditioning target area 101.

The input part 34 allows the user to manually input the information related to the size of the air conditioning target area 101.

### (3) Overall operation

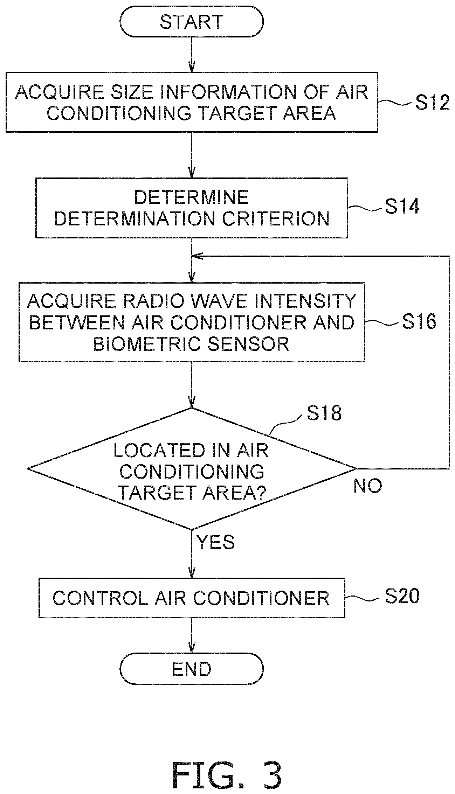

FIG. 3 is a flowchart of the control system 100.

First, in step S12, the second acquisition part 18 acquires the information related to the size of the air conditioning target area 101 manually input from the input part 34 of the remote controller 30.

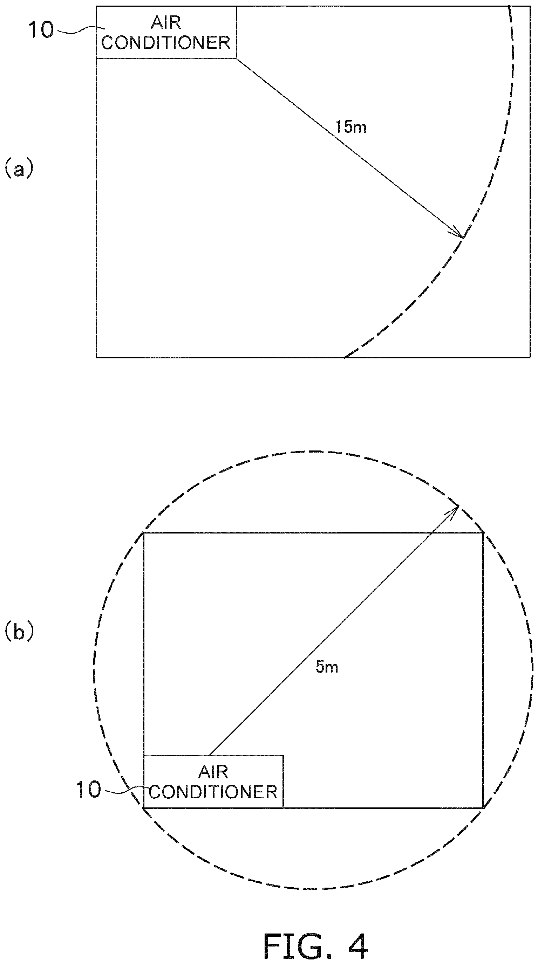

FIG. 4 is an example of the air conditioning target area 101. Upon determination of a reachable range of the air conditioner 10 in the air conditioning target area 101, options such as a large room and a small room are prepared in advance and manually selected by the user. For example, as illustrated in FIG. 4(a), an area included in a range of a radius of 15 m from an installation location of the air conditioner 10 is set as a large room, and as illustrated in FIG. 4(b), an area included in a range of a diameter of 5 m from the installation location of the air conditioner 10 is set as a small room. Options related to a size of the room (the size of the air conditioning target area 101) are displayed on the display 32 of the remote controller 30. The user uses the input part 34 of the remote controller 30 to select the size of the air conditioning target area 101 from the options displayed on the display 32.

The second determination part 16 determines a determination criterion based on the information related to the size of the air conditioning target area 101 (step S14).

The first acquisition part 12 acquires the radio wave intensity between the air conditioner 10 and the wearable sensor 20 as the first information (step S16).

Next, in step S18, based on the first information acquired in step 16 and the determination criterion determined in step S14, the first determination part 14 determines whether the wearable sensor 20 is located in the air conditioning target area 101.

When the first determination part 14 estimates that the wearable sensor 20 is located in the air conditioning target area 101 (Yes in step S18), the air conditioner 10 is controlled using the detection value of the wearable sensor 20 (step S20).

When the first determination part 14 estimates that the wearable sensor 20 is not located in the air conditioning target area 101 (No in step S18), the processing returns to step S16.

Next, a case where a plurality of users are present in the air conditioning target area 101 will be described.

Upon determination of whether to use the detection values of the wearable sensors 20 worn by the plurality of users for controlling the air conditioner 10, the first determination part 14 determines that the detection values of the wearable sensors 20 worn by the plurality of users are not used for controlling the air conditioner 10 when all the users move and positions of the wearable sensors 20 worn by the plurality of users are changed from an inside of the air conditioning target area 101 to an outside of the air conditioning target area 101. After the positions of all the wearable sensors 20 connected to the air conditioner 10 are changed from an inside of the air conditioning target area 101 to an outside of the air conditioning target area 101 by the movement of the plurality of users, the operation of the air conditioner 10 is stopped or suppressed.

### (4) Characteristics

(4-1) The control system 100 according to the present embodiment is a control system that controls the air conditioner 10 that air-conditions the air conditioning target area 101 using the detection value of the wearable sensor 20 worn by the user. The control system 100 according to the present embodiment includes the first acquisition part 12, the first determination part 14, and the second determination part 16. The first acquisition part 12 acquires the first information related to the distance between the reference point of the air conditioning target area 101 and the wearable sensor 20. The first determination part 14 determines whether to use the detection value of the wearable sensor 20 for controlling the air conditioner 10 based on the first information and the determination criterion. The second determination part 16 determines the determination criterion.

In the control system 100, the air-conditioning control is more appropriately performed when the detection value of the wearable sensor 20 worn by the user is used for controlling the air conditioner 10. In the control system 100, by determining the determination criterion for determining whether to use the detection value of the wearable sensor 20 worn by the user for the air conditioning control, the air conditioner 10 can be controlled using biometric information of the user regardless of the size of the air conditioning target area 101.

(4-2) In the control system 100 according to the present embodiment, the first determination part 14 determines whether the wearable sensor 20 is located in the air conditioning target area 101 based on the first information and the determination criterion.

In the control system 100, when the wearable sensor 20 is located in the air conditioning target area 101, the detection value of the wearable sensor 20 can be used for controlling the air conditioner 10.

(4-3) In the control system 100 according to the present embodiment, the first acquisition part 12 acquires the radio wave intensity between the air conditioner 10 and the wearable sensor 20 as the first information.

In the control system 100, the radio wave intensity can be used for determining whether to use the detection value of the wearable sensor 20 for controlling the air conditioner 10.

(4-4) The control system 100 according to the present embodiment further includes the second acquisition part 18 that acquires manually input information. The manually input information includes at least one of the information related to the size of the air conditioning target area 101 or the information related to the distance from the reference point of the air conditioning target area 101, and the second determination part 16 determines the determination criterion based on the information from the second acquisition part 18.

In the control system 100, initial setting of control of the air conditioner 10 can be performed by manually inputting information.

(4-5) A control system 100 not according to the present invention may further include an automatic measurement part that automatically measures the size or the shape of the air conditioning target area 101, and the second determination part 16 determines the determination criterion based on a measurement result by the automatic measurement part.

In this control system, the size or the shape of the air conditioning target area 101 can be automatically measured to determine the determination criterion.

(4-6) In the control system 100 according to the present embodiment, upon determination of whether to use the detection values of the wearable sensors 20 worn by the plurality of users for controlling the air conditioner 10, the first determination part 14 determines that the detection values of the wearable sensors 20 are not used for controlling the air conditioner 10 when the positions of the wearable sensors 20 are changed from an inside of the air conditioning target area 101 to an outside of the air conditioning target area 101.

In the control system 100, the air-conditioning control is more appropriately performed when the detection values of the wearable sensors 20 worn by the plurality of users are used for controlling the air conditioner 10.

(4-7) In the control system 100 according to the present embodiment, after the positions of all the biometric sensors connected to the air conditioner 10 are changed from an inside of the air conditioning target area 101 to an outside of the air conditioning target area 101, the operation of the air conditioner 10 is stopped or suppressed.

In the control system 100, energy can be saved by stopping or suppressing the operation of the air conditioner 10.

(4-8) In the control system 100 according to the present embodiment, the air conditioner 10 and the wearable sensor 20 keep connected to each other when the position of the wearable sensor 20 is changed from an inside of the air conditioning target area 101 to an outside of the air conditioning target area 101.

In the control system 100, even when the user wearing the wearable sensor 20 temporarily moves out of the air conditioning target area 101 and then returns into the air conditioning target area 101, the detection value of the wearable sensor 20 can be promptly used.

(4-9) In the control system 100 according to the present embodiment, when the detection value of the wearable sensor 20 is used in the air conditioning target area 101, the control of the air conditioner 10 is further changed in accordance with the distance.

In the control system 100, when the positions of some of the plurality of wearable sensors are far from the reference point of the air conditioner, the weighting of the detection values of the wearable sensors far from the reference point is reduced, the weighting of the detection values of the wearable sensors close to the reference point is increased, and the detection values of the wearable sensors can be used for controlling the air conditioner.

### (5) Modifications

### (5-1) Modification 1A

In the control system 100 according to the present embodiment, upon determination of the reachable range of the air conditioner 10 in the air conditioning target area 101, the options such as a large room and a small room are prepared in advance and are manually selected by the user. However, the present invention is not limited to this description. Upon determination of the reachable range of the air conditioner 10 in the air conditioning target area 101, for example, assuming that a room is simply a quadrangle, the user may manually input lengths of four sides of the room, and an installation company may select a position of the air conditioner such as a center, a left corner, or a right corner of a wall. The reachable range of the air conditioner in the air conditioning target area may be defined in association with communication intensity by bordering the room with a smartphone or the wearable sensor held by the user.

### (5-2) Modification 1B - Not according to the invention

In the control system 100 according to the present embodiment, upon determination of the reachable range of the air conditioner 10 in the air conditioning target area 101, the options such as a large room and a small room are prepared in advance and are manually selected by the user in the above description. Alternatively, a control system 100 not according to the present invention may include an automatic measurement part that automatically measures the size or the shape of the air conditioning target area 101. For example, an air conditioner 10 may include a radar sensor, and the shape of the air conditioning target area 101 may be detected using the radar sensor. The size or the shape of the air conditioning target area 101 may be detected by simultaneous localization and mapping (SLAM) by running a mobile unit into the air conditioning target area 101. The reachable range of the air conditioner 10 in the air conditioning target area 101 may be defined from the detection result as to whether the user is in the air conditioning target area 101 and Bluetooth (registered trademark) communication intensity at a boundary between an area where the user is present and an area where the user is not present. The reachable range of the air conditioner 10 in the air conditioning target area 101 may be defined by image analysis using an optical sensor. The size of the air conditioning target area 101 estimated from a capability class of the air conditioner 10 and a rate of change in temperature in the air conditioning target area 101 may be assumed to be the reachable range of the air conditioner 10 in the air conditioning target area 101.

### (5-3) Modification 1C

In the control system 100 according to the present embodiment, when the wearable sensor 20 is located in the air conditioning target area 101, the detection value of the wearable sensor 20 is used for controlling the air conditioner 10 in the above description. When the position of the wearable sensor 20 is changed from an inside of the air conditioning target area 101 to an outside of the air conditioning target area 101, the air conditioner 10 and the wearable sensor 20 may keep connected to each other.

### (5-4) Modification 1D

In the control system 100 according to the present embodiment, the detection value of the biometric sensor 20 is used for controlling the air conditioner 10 when the biometric sensor (wearable sensor) 20 is in the air conditioning target area 101 in the above description. When the detection value of the biometric sensor 20 is used in the air conditioning target area 101, the control of the air conditioner 10 may be further changed in accordance with the distance.

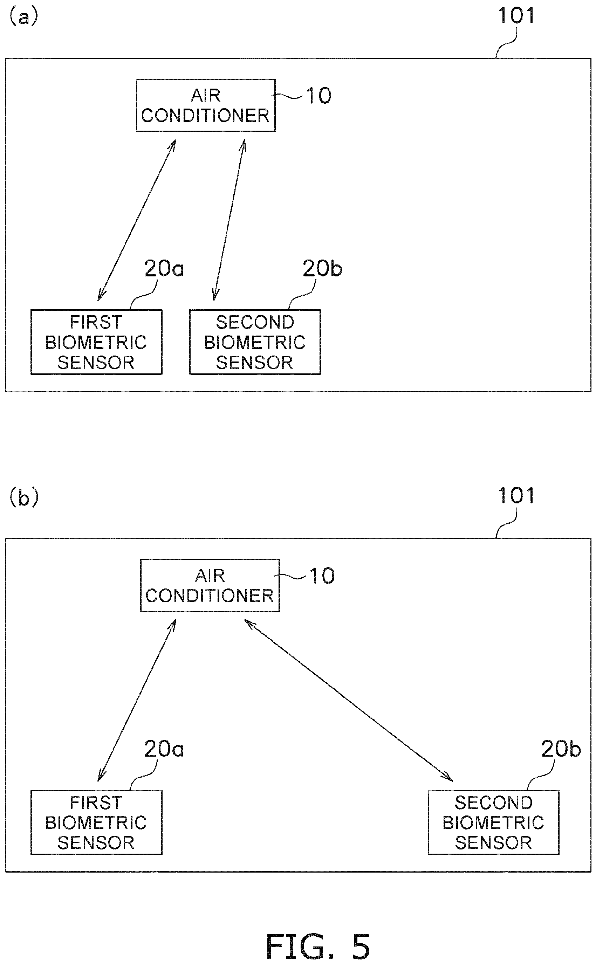

As illustrated in FIG. 5(a), when the first biometric sensor 20a and the second biometric sensor 20b are located close to the air conditioner, the detection values of both the first biometric sensor 20a and the second biometric sensor 20b are used for controlling the air conditioner 10 with the same weighting. For example, when the detection value of the first biometric sensor 20a is 25 degrees and the detection value of the second biometric sensor 20b is 27 degrees, the air conditioner 10 is controlled to 26 degrees.

As illustrated in FIG. 5(b), when the first biometric sensor 20a is located close to the air conditioner 10 but the second biometric sensor 20b is located away from the air conditioner 10, the weighting of the detection value of the first biometric sensor 20a is increased, the weighting of the detection value of the second biometric sensor 20b is decreased, and the detection values of the first biometric sensor 20a and the second biometric sensor 20b are used for controlling the air conditioner 10. In this case, the weighting of 25 degrees of the detection value of the first biometric sensor 20a is increased, and the weighting of 27 degrees of the detection value of second biometric sensor 20b is decreased, and thus the air conditioner is controlled to 25.5 degrees.

### (5-5) Modification 1E

In the control system 100 according to the present embodiment, the air conditioner 10 directly receives the radio wave from the wearable sensor 20 in the above description. Alternatively, the air conditioner 10 may receive the radio wave from the wearable sensor 20 via a relay device.

### <Second embodiment>

### (1) Overall configuration

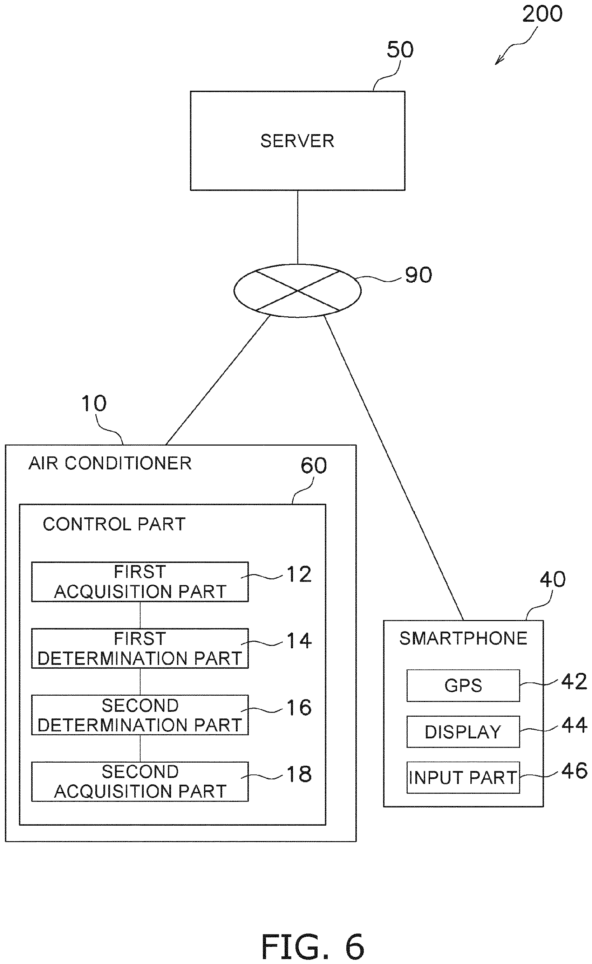

As shown in FIG. 6, a control system 200 according to the present embodiment includes the air conditioner 10, a biometric sensor 40, and a server 50. The air conditioner 10 is connected to the server 50 via a network 90. The smartphone (biometric sensor) 40 communicates with the server 50.

### (2) Detailed configuration

### (2-1) Air conditioner 10

The air conditioner 10 is an air conditioner having functions of cooling, heating, dehumidifying, and humidifying. The air conditioner 10 according to the present embodiment air-conditions the air conditioning target area 101 using a detection value of the biometric sensor 40 worn by the user.

The air conditioner 10 includes a control unit 60. Note that, in the control system 200 according to the present embodiment, the configuration of the control unit 60 is basically the same as the configuration of the control system 100, and thus a detailed description thereof will be omitted.

### (2-2) Biometric sensor 40

In the control system 200 according to the present embodiment, the biometric sensor 40 is a smartphone. The smartphone 40 includes a GPS 42, a display 44, and an input part 46.

The display 44 displays options for allowing the user to manually input the information related to the size of the air conditioning target area 101.

The input part 46 allows the user to manually input the information related to the size of the air conditioning target area 101.

The smartphone 40 communicates with the server 50 to transmit the information input from the input part 46 of the smartphone 40 to the air conditioner 10. The air conditioner 10 communicates with the server 50 via the network 90. The smartphone 40 communicating with the server 50 displays the information and the like transmitted from the air conditioner 10 on the display 44.

### (3) Overall operation

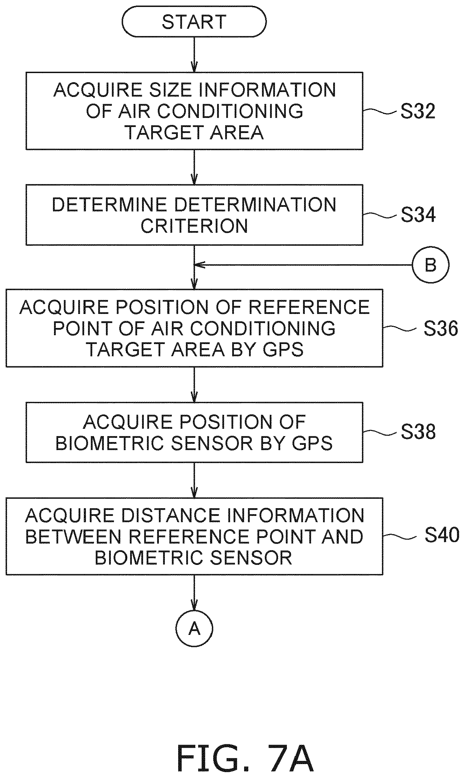

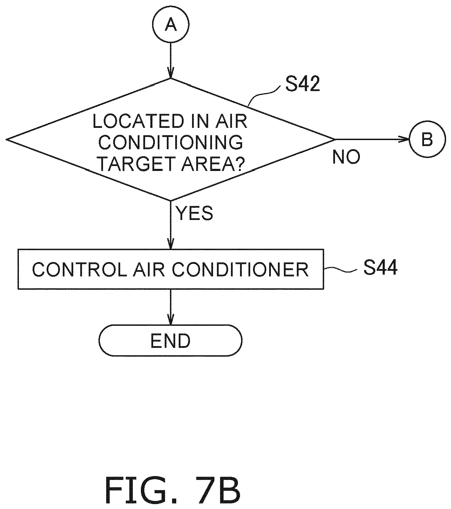

FIGS. 7A and 7B are flowcharts of the control system 200.

First, in step 32, the second acquisition part 18 acquires the information related to the size of the air conditioning target area 101 manually input from the input part 46 of the smartphone 40.

The second determination part 16 determines a determination criterion based on the information related to the size of the air conditioning target area 101 (step S34).

The first acquisition part 12 acquires a position of the reference point of the air conditioning target area 101 by the GPS 42 (step S36). The first acquisition part 12 acquires a position of the smartphone 40 by the GPS 42 (step S38).

The first acquisition part 12 acquires, as the first information, distance information between the reference point of the air conditioning target area 101 and the smartphone 40 based on the information on the position of the reference point of the air conditioning target area 101 and the position of the smartphone 40 (step S40).

Next, in step S42, based on the first information acquired in step S40 and the determination criterion determined in step S34, the first determination part 14 determines whether the smartphone 40 is located in the air conditioning target area 101.

When the first determination part 14 estimates that the smartphone 40 is located in the air conditioning target area 101 (Yes in step S40), the air conditioner is controlled using the detection value of the smartphone 40 (step S42).

When the first determination part 14 estimates that the smartphone 40 is not located in the air conditioning target area 101 (No in step S40), the processing returns to step S36.

### (4) Characteristics

(4-1) In the control system 200 according to the present embodiment, the first acquisition part 12 acquires the position of the reference point of the air conditioning target area 101 and the position of the biometric sensor 40 and thus acquires the distance information between the reference point of the air conditioning target area 101 and the biometric sensor 40 as the first information.

In the control system 200, the position information by the GPS 42 can be used for determining whether to use the detection value of the biometric sensor 40 for controlling the air conditioner 10.

### (5) Modifications

### (5-1) Modification 2A

The modifications 1A to 1D described in the first embodiment are similarly applied to the control system 200 according to the present embodiment.

### (5-2) Modification 2B

The embodiments of the present disclosure have been described above. Various modifications to modes and details should be available without departing from the object and the scope of the present invention which is recited in the claims.

### REFERENCE SIGNS LIST

100, 200: control system
101: air conditioning target area
10: air conditioner
2a, 2b, 2c, 20a, 20b: biometric sensor
20: wearable sensor (biometric sensor)
3a, 3b, 3c: user
20a: first biometric sensor
20b: second biometric sensor
30: remote controller
32, 44: display
34, 46: input part
40: smartphone (biometric sensor)
42: GPS
50: server
52: storage unit
90: network
12: first acquisition part
14: first determination part
16: second determination part
18: second acquisition part

## Claims

1. A control system (100, 200) adapted for controlling an air conditioner (10) configured for air-conditioning an air conditioning target area (101) using a detection value of a biometric sensor (20, 40) worn by a user, the control system comprising:
a first acquisition part (12) configured to acquire first information related to a distance between a reference point of the air conditioning target area and the biometric sensor;
a first determination part (14) configured to determine whether to use a detection value of the biometric sensor for controlling the air conditioner based on the first information and a determination criterion; and
a second determination part (16) configured to determine the determination criterion, **characterized in that**,
the control system includes a second acquisition part (18) configured to acquire information manually input, wherein the information manually input includes information related to a size of the air conditioning target area, and **in that** the second determination part is configured to determine the determination criterion based on the information from the second acquisition part.

2. The control system according to claim 1, wherein the first determination part is configured to determine whether the biometric sensor is located in the air conditioning target area based on the first information and the determination criterion.

3. The control system according to claim 1 or 2, wherein the first acquisition part is configured to acquire radio wave intensity between the air conditioner and the biometric sensor as the first information.

4. The control system according to claim 1 or 2, wherein the first acquisition part is configured to acquire a position of the reference point of the air conditioning target area and a position of the biometric sensor and thus to acquire distance information between the reference point of the air conditioning target area and the biometric sensor as the first information.

5. The control system according to claim 1, wherein
the information manually input further includes information related to the distance from the reference point of the air conditioning target area.

6. The control system according to claim 1, wherein upon determination of whether to use detection values of biometric sensors worn by a plurality of users for controlling the air conditioner, the first determination part is configured to determine that the detection values of the biometric sensors is not used for controlling the air conditioner when positions of the biometric sensors are changed from an inside of the air conditioning target area to an outside of the air conditioning target area.

7. The control system according to claim 6, wherein after the positions of all the biometric sensors connected to the air conditioner are changed from an inside of the air conditioning target area to an outside of the air conditioning target area, operation of the air conditioner is stopped or suppressed.

8. The control system according to claim 3, wherein the air conditioner and the biometric sensor are configured to keep connected to each other when the position of the biometric sensor is changed from an inside of the air conditioning target area to an outside of the air conditioning target area.

9. The control system according to claim 1, wherein when it is determined to use the detection value of the biometric sensor in the air conditioning target area, control of the air conditioner is changed in accordance with the distance.

## Patentansprüche

1. Steuerungssystem (100, 200), eingerichtet für die Steuerung einer Klimaanlage (10), ausgelegt zum Klimatisieren eines Klimatisierungszielbereichs (101) unter Nutzung eines Detektionswerts eines biometrischen Sensors (20, 40), der von einem Nutzer getragen wird, wobei das Steuerungssystem Folgendes umfasst:
einen ersten Erfassungsteil (12), der ausgelegt ist, um erste Informationen zu erfassen, die sich auf eine Entfernung zwischen einem Referenzpunkt des Klimatisierungszielbereichs und dem biometrischen Sensor beziehen;
einen ersten Ermittlungsteil (14), der ausgelegt ist, um zu ermitteln, ob ein Detektionswert des biometrischen Sensors zur Steuerung der Klimaanlage genutzt werden soll, basierend auf den ersten Informationen und einem Ermittlungskriterium, und
einen zweiten Ermittlungsteil (16), der ausgelegt ist, um das Ermittlungskriterium zu ermitteln, **dadurch gekennzeichnet, dass**
das Steuerungssystem einen zweiten Erfassungsteil (18) einschließt, der ausgelegt ist, um manuell eingegebene Informationen zu erfassen, wobei die manuell eingegebenen Informationen Informationen einschließen, die sich auf eine Größe des Klimatisierungszielbereichs beziehen, und dadurch, dass der zweite Ermittlungsteil ausgelegt ist, um das Ermittlungskriterium basierend auf den Informationen vom zweiten Erfassungsteil zu ermitteln.

2. Steuerungssystem nach Anspruch 1, wobei der erste Ermittlungsteil ausgelegt ist, um zu ermitteln, ob der biometrische Sensor im Klimatisierungszielbereich platziert ist, basierend auf den ersten Informationen und dem Ermittlungskriterium.

3. Steuerungssystem nach Anspruch 1 oder 2, wobei der erste Ermittlungsteil ausgelegt ist, um die Funkwellenintensität zwischen der Klimaanlage und dem biometrischen Sensor als erste Informationen zu erfassen.

4. Steuerungssystem nach Anspruch 1 oder 2, wobei der erste Erfassungsteil ausgelegt ist, um eine Position des Referenzpunkts des Klimatisierungszielbereichs und eine Position des biometrischen Sensors zu erfassen und so Entfernungsinformationen zwischen dem Referenzpunkt des Klimatisierungszielbereichs und dem biometrischen Sensor als erste Informationen zu erfassen.

5. Steuerungssystem nach Anspruch 1, wobei die manuell eingegebenen Informationen zudem Informationen einschließen, die sich auf die Entfernung vom Referenzpunkt des Klimatisierungszielbereichs beziehen.

6. Steuerungssystem nach Anspruch 1, wobei der erste Ermittlungsteil beim Ermitteln, ob Detektionswerte biometrischer Sensoren, die von einer Vielzahl von Nutzern getragen werden, zum Steuern der Klimaanlage genutzt werden sollen, ausgelegt ist, um festzulegen, dass die Detektionswerte der biometrischen Sensoren nicht zur Steuerung der Klimaanlage genutzt werden, wenn Positionen der biometrischen Sensoren von einer Innenseite des Klimatisierungszielbereichs zu einer Außenseite des Klimatisierungszielbereichs geändert werden.

7. Steuerungssystem nach Anspruch 6, wobei der Betrieb der Klimaanlage gestoppt oder unterbunden wird, nachdem die Positionen aller biometrischer Sensoren, die mit der Klimaanlage verbunden sind, von einer Innenseite des Klimatisierungszielbereichs zu einer Außenseite des Klimatisierungszielbereichs geändert wurden.

8. Steuerungssystem nach Anspruch 3, wobei die Klimaanlage und der biometrische Sensor ausgelegt sind, um miteinander verbunden zu bleiben, wenn die Position des biometrischen Sensors von einer Innenseite des Klimatisierungszielbereichs zu einer Außenseite des Klimatisierungszielbereichs geändert wird.

9. Steuerungssystem nach Anspruch 1, wobei die Steuerung der Klimaanlage im Einklang mit der Entfernung geändert wird, wenn festgelegt wird, dass der Detektionswert des biometrischen Sensors im Klimatisierungszielbereich genutzt wird.

## Revendications

1. Système de commande (100, 200), adapté pour commander un climatiseur (10) configuré pour climatiser une zone cible de climatisation (101) en utilisant une valeur de détection d'un capteur biométrique (20, 40) porté par un utilisateur, le système de commande comprenant :
une première partie d'acquisition (12) configurée pour acquérir des premières informations relatives à une distance entre un point de référence de la zone cible de climatisation et le capteur biométrique ;
une première partie de détermination (14) configurée pour déterminer s'il faut utiliser une valeur de détection du capteur biométrique pour commander le climatiseur sur la base des premières informations et d'un critère de détermination ; et
une deuxième partie de détermination (16) configurée pour déterminer le critère de détermination, **caractérisé en ce que**
le système de commande inclut une deuxième partie d'acquisition (18) configurée pour acquérir des informations saisies manuellement, dans lequel les informations saisies manuellement incluent des informations relatives à une taille de la zone cible de climatisation, et **en ce que** la deuxième partie de détermination est configurée pour déterminer le critère de détermination sur la base des informations provenant de la deuxième partie d'acquisition.

2. Système de commande selon la revendication 1, dans lequel la première partie de détermination est configurée pour déterminer si le capteur biométrique est situé dans la zone cible de climatisation sur la base des premières informations et du critère de détermination.

3. Système de commande selon la revendication 1 ou 2, dans lequel la première partie d'acquisition est configurée pour acquérir l'intensité des ondes radio entre le climatiseur et le capteur biométrique en tant que première information.

4. Système de commande selon la revendication 1 ou 2, dans lequel la première partie d'acquisition est configurée pour acquérir une position du point de référence de la zone cible de climatisation et une position du capteur biométrique et donc pour acquérir des informations de distance entre le point de référence de la zone cible de climatisation et le capteur biométrique en tant que première information.

5. Système de commande selon la revendication 1, dans lequel les informations saisies manuellement incluent de plus des informations relatives à la distance à partir du point de référence de la zone cible de climatisation.

6. Système de commande selon la revendication 1, dans lequel lors de la détermination de l'utilisation des valeurs de détection des capteurs biométriques portés par une pluralité d'utilisateurs pour commander le climatiseur, la première partie de détermination est configurée pour déterminer que les valeurs de détection des capteurs biométriques ne sont pas utilisées pour commander le climatiseur lorsque les positions des capteurs biométriques sont passées d'un intérieur de la zone cible de climatisation à un extérieur de la zone cible de climatisation.

7. Système de commande selon la revendication 6, dans lequel le fonctionnement du climatiseur est arrêté ou supprimé après que les positions de tous les capteurs biométriques connectés au climatiseur sont passées d'un intérieur de la zone cible de climatisation à un extérieur de la zone cible de climatisation.

8. Système de commande selon la revendication 3, dans lequel le climatiseur et le capteur biométrique sont configurés pour rester connectés l'un à l'autre lorsque la position du capteur biométrique passe d'un intérieur de la zone cible de climatisation à un extérieur de la zone cible de climatisation.

9. Système de commande selon la revendication 1, dans lequel, lorsqu'il est déterminé d'utiliser la valeur de détection du capteur biométrique dans la zone cible de climatisation, la commande du climatiseur est modifié selon la distance.
